# FASCICULE DE BREVET EUROPEEN

(11) **EP 1 438 761 B1**
(45) Date de publication et mention de la délivrance du brevet: **10.08.2011**
(21) Numéro de dépôt: 02785529.5
(22) Date de dépôt: 08.10.2002
(51) Int. Cl.: H01M 4/48

(54) **OXYDE DE LITHIUM ET DE VANADIUM, UN PROCEDE POUR SA PREPARATION, SON UTILISATION COMME MATIERE ACTIVE D'ELECTRODE**
OXYD AUS LITHIUM UND VANADIUM, HERSTELLUNGSVEFAHREN, SEINE VERWENDUNG ALS AKTIVE ELEKTRODENMATERIAL
LITHIUM AND VANADIUM OXIDE, A PREPARATION METHOD THEREOF AND THE USE OF SAME AS AN ACTIVE ELECTRODE MATERIAL

(30) Priorité: 25.10.2001 FR 0113821
(43) Date de publication de la demande: 21.07.2004
(73) Titulaire: CENTRE NATIONAL DE LA RECHERCHE SCIENTIFIQUE (CNRS), 75016 Paris (FR); Electricité de France, 75008 Paris (FR)
(72) Inventeur: JOUANNEAU, Séverine, F-49124 Saint Barthelemy d'Anjou (FR); GUYOMARD, Dominique, F-44880 Sautron (FR); LE GAL LA SALLE, Annie, F-44240 La Chapelle sur Erdre (FR); VERBAERE, Alain, F-44240 La Chapelle sur Erdre (FR); LASCAUD, Stéphane, F-77300 Fontainebleau (FR); BOURGEON, Nelly, F-44800 Saint Herblain (FR); DESCHAMPS, Marc, F-29000 Quimper (FR)
(74) Mandataire: Blot, Philippe Robert Emile
(86) Numéro de dépôt international: PCT/FR2002/003424
(87) Numéro de publication internationale: WO 2003/036742

(56) Documents cités:
- WO-A-00/44673
- US-A- 5 520 903
- PATENT ABSTRACTS OF JAPAN vol. 015, no. 510 (E-1149), 25 décembre 1991 (1991-12-25) -& JP 03 225774 A (BRIDGESTONE CORP), 4 octobre 1991 (1991-10-04)
- DATABASE WPI Section Ch, Week 199429 Derwent Publications Ltd., London, GB; Class L03, AN 1994-238457 XP002205935 -& JP 06 171947 A (MITSUI TOATSU CHEM INC) , 21 juin 1994 (1994-06-21)
- PATENT ABSTRACTS OF JAPAN vol. 014, no. 085 (E-0890), 16 février 1990 (1990-02-16) -& JP 01 296567 A (YUASA BATTERY CO LTD), 29 novembre 1989 (1989-11-29)
- PATENT ABSTRACTS OF JAPAN vol. 1998, no. 10, 31 août 1998 (1998-08-31) -& JP 10 116628 A (HITACHI LTD), 6 mai 1998 (1998-05-06)
- S PANERO ET AL: "Rechargeable Li/Li1+xV3O8 Cells" JOURNAL OF THE ELECTROCHEMICAL SOCIETY, vol. 130, no. 5, mai 1983 (1983-05), pages 1225-1227, XP002205945 MANCHESTER, NEW HAMPSHIRE US
- DATABASE CA [en ligne] CHEMICAL ABSTRACTS SERVICE, COLUMBUS, OHIO, US; MISHIMA, HIROMITSU: "Secondary nonaqueous batteries" retrieved from STN Database accession no. 114:125869 CA XP002206059 -& JP 02 267857 A (YUASA BATTERY CO., LTD., JAPAN) 1 novembre 1990 (1990-11-01) -& PATENT ABSTRACTS OF JAPAN vol. 015, no. 022 (E-1024), 18 janvier 1991 (1991-01-18) & JP 02 267857 A (YUASA BATTERY CO LTD), 1 novembre 1990 (1990-11-01)
- L.A. DE PICCIOTTO ET AL: "structural Characterization of Li1+xV3O8 insertion electrodes by single-crystal X-ray diffraction" SOLID STATE IONICS, vol. 62, 1993, pages 297-307, XP002205932 AMSTERDAM NL
- ZHANG X ET AL: "Spectroscopic investigation of Li1 + xV3O8" ELECTROCHIMICA ACTA, ELSEVIER SCIENCE PUBLISHERS, BARKING, GB, vol. 43, no. 8, 1998, pages 861-868, XP004106710 ISSN: 0013-4686
- DATABASE CA [en ligne] CHEMICAL ABSTRACTS SERVICE, COLUMBUS, OHIO, US; BENEDEK, R. ET AL: "Structure and electrochemical potential simulation for the cathode material Li1+xV3O8" retrieved from STN Database accession no. 129:124806 CA XP002206060 & MATERIALS RESEARCH SOCIETY SYMPOSIUM PROCEEDINGS (1998), 496(MATERIALS FO ELECTROCHEMICAL ENERGY STORAGE AND CONVERSION II--BATTERIES, CAPACITORS AND FUEL CELLS), 115-120, 1998,

## Description

La présente invention concerne un oxyde de lithium et de vanadium, un procédé pour sa préparation, ainsi que son utilisation comme matière active de cathode dans une batterie au lithium.

Les propriétés principales recherchées pour un matériau destiné à être utilisé comme matière active de cathode dans une batterie au lithium sont une énergie spécifique (qui est le produit de la capacité par le potentiel moyen) élevée et une longue durée de vie en cyclage. Le matériau Li₁₊ₓV₃O₈, qui a été largement étudié, permet d'obtenir une capacité élevée, supérieure à 150 Ah/kg lors des premières décharges, mais cette capacité diminue assez rapidement avec le nombre de cycles charge/décharge. Divers procédés de préparation de L₁₊ₓV₃O₈ par réaction de Li₂CO₃ et de V₂O₅ sont décrits dans l'art antérieur. Ainsi, Hammou, et al. [Electrochim. Acta, 13 (1988) 1719] décrit un procédé pour la préparation d'oxyde de lithium et de vanadium dans lequel les réactifs réagissent à l'air pendant 6 h à 590°C, ainsi que l'utilisation de l'oxyde obtenu dans une batterie Li-polymère. Cette température est cependant très proche de la température de fusion et il en résulte un frittage de la poudre qu'il est nécessaire de broyer avant de l'utiliser pour la préparation d'une électrode composite. L'étude du comportement en cyclage montre une perte de capacité de l'ordre de 15% entre le 1^{er} et le 15^{ème} cycle. US-6,136,476 décrit un procédé dans lequel les réactifs sont chauffés à une température inférieure à la température de fusion, de préférence entre 350°C et 550°C, après avoir mélangé les réactifs à l'aide d'un désintégrateur à jet d'air en vue de réduire la dimension de particules et d'homogénéiser la distribution de la taille des grains. D'autres techniques de mélange préliminaire des réactifs sont citées, notamment l'utilisation de mélangeurs à tambours rotatifs, de broyeurs vibrants ou de broyeurs à bille. Chaloner-Gill, et al [J. Electrochem. Soc., 147, (10) 3575-3578 (2000)] décrit un procédé comportant une succession d'étapes, à savoir : broyage du mélange de réactifs, chauffage à l'air à 585°C pendant 16 h, refroidissement et rebroyage, second chauffage à l'air à 585°C pendant 16 h, réaction avec Li₂S. Le matériau obtenu est utilisé comme matière active de cathode dans une batterie au lithium et il est noté que la capacité décroît de manière significative avec le nombre de cycles charge-décharge. US-5,520,903 décrit un procédé consistant à broyer les réactifs en vue de le mélanger et de réduire la dimension des grains, à compresser pour former une poudre compacte, puis à chauffer le mélange compressé à une température entre 580 et 585°C. Dans ce cas, le produit obtenu est un agglomérat de grains monocristallins soudés entre eux qu'il est nécessaire de broyer avant de l'utiliser comme matériau d'électrode. Le broyage donne certes des grains libres, mais il provoque également la perte de la morphologie monocristalline en bâtonnets et des grains polycristallins écrasés sont obtenus. Il est noté que dans un mode de réalisation particulier, sans compression, le produit obtenu après chauffage contient une quantité non négligeable d'impuretés du type V₂O₅.

Le but de la présente invention est de fournir un oxyde de lithium et de vanadium qui présente des propriétés améliorées lorsqu'il est utilisé comme matière active de la cathode d'une batterie au lithium, ainsi qu'un procédé simplifié pour sa préparation.

Le composé selon la présente invention répond à la formule Li₁₊ₓV₃O₈ dans laquelle 0,1 ≤ x ≤ 0,25, il a une structure cristalline monoclinique, et il est caractérisé en ce qu'il est constitué de grains non agglomérés en forme de bâtonnets monocristallins :
- qui ont une longueur L comprise entre 1 et 100 µm, une largeur ℓ telle que 4 < L/ℓ < 100, et une épaisseur e telle que 4 < L/e < 100, avec e < ℓ ;
- dont l'axe d'allongement est l'axe b de la maille monoclinique.

De préférence, les dimensions respectives sont telles que 10 < L/ℓ < 50, et 10 < L/e < 50.

Dans les grains formant le composé de l'invention, la largeur ℓ correspond à la face cristalline (100) qui est la face la plus développée.

La morphologie du composé de l'invention peut être déterminée par microscopie à balayage, par exemple à l'aide d'un microscope électronique à balayage de type JEOL JSM 6400F à haute résolution, donnant des grossissement de x1000 à x30000.

Le procédé pour la préparation du composé de l'invention consiste à faire réagir au moins un précurseur de Li avec au moins un précurseur de vanadium, et il est caractérisé en ce que :
- on introduit dans un mélangeur le(s) précurseur(s) de Li et le(s) précurseur(s) de V en poudre dans les proportions stoechiométriques Li/V = (1+x)/3 ;
- on effectue le mélangeage dans des conditions telles que, après le mélangeage, la densité du mélange obtenu est inférieure à 1,5 et les dimensions des grains de poudre sont telles que leur longueur soit supérieure à 1 µm, leur largeur soit supérieure à 0,1 µm et leur épaisseur soit supérieure à 0,1 µm ;
- on porte le mélange obtenu à une température comprise entre 565°C et 585°C, de préférence entre 575°C et 585°C, et l'on maintient cette température pendant une durée comprise entre 30 min et 10 h ;
- on effectue une désagglomération du produit obtenu pour séparer les grains de poudre sans les broyer.

Le précurseur de lithium peut être choisi parmi les sels de lithium et les oxydes de lithium. A titre d'exemple, on peut citer Li₂CO₃, LiNO₃, LiOH, LiOH.H₂O et Li₂O. On peut également citer les sels organiques tels que l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium. Le précurseur de vanadium peut être choisi parmi les sels de vanadium et les oxydes de vanadium. A titre d'exemple, on peut citer V₂O₅-α, NH₄VO₃, V₂O₄ et V₂O₃. Bien entendu, les sels peuvent être utilisé seuls, ou sous forme de mélanges d'au moins deux d'entre eux. Dans un mode de réalisation particulier, le précurseur de lithium peut être un composé mixte de Li et de V, par exemple LiVO₃, Li₃VO₄ et LiV₂O₅ ; dans ce cas, le précurseur de lithium apporte une partie de la quantité requise de vanadium, et il suffit d'introduire la quantité de précurseur de vanadium nécessaire pour atteindre la stoechiométrie indiquée ci-dessus.

Le procédé selon l'invention permet d'obtenir le composé Lii+xV₃0₈ sous une forme pure. L'analyse par diffraction des rayons X confirme l'absence de traces d'impuretés, notamment de Vu05.

L'étape de mélangeage des réactifs est destinée à obtenir un mélange homogène des réactifs en évitant de réduire la dimension des grains des réactifs. En effet, en dessous d'une certaine taille de grains et au-dessus d'une certaine densité du mélange de réactifs, la réaction de formation de Li₁₊ₓV₃O₈ à un température autour de 580°C provoque une croissance cristalline en bâtonnets soudés entre eux. Un mélangeage doux tel que mis en oeuvre dans le procédé de l'invention peut être effectué par exemple dans une Pulvérisette 7 commercialisée par la société Fritsch lorsque la quantité de mélange à traiter est de l'ordre de quelques grammes ou dans un mélangeur à lit fluidisé, à tambour horizontal ou à hélice (par exemple un mélangeur VMI/RAYNERI de type R51) lorsque la quantité à traiter est de l'ordre de quelques kilogrammes.

Un composé Li₁₊ₓV₃O₈ selon la présente invention peut être avantageusement utilisé comme matière active pour l'électrode positive d'une batterie rechargeable, qui constitue un autre objet de la présente invention.

Dans un mode de réalisation particulier, une électrode positive selon la présente invention contient un oxyde de lithium et de vanadium selon la présente invention comme matière active, un matériau conférant des propriétés de conduction électronique et un matériau composite conférant des propriétés de conduction ionique et des propriétés mécaniques. La teneur en matière active est comprise de préférence entre 40 et 90% en masse, plus particulièrement entre 50 et 65% en masse. La teneur en matériau conférant une conduction électronique est comprise de préférence entre 5 et 20% en masse, plus particulièrement entre 10 et 15% en masse. La teneur en matériau composite conférant la conduction ionique et les propriétés mécaniques est comprise de préférence entre 5 et 40% en masse, plus particulièrement entre 25 et 35% en masse.

Le matériau conférant des propriétés de conduction ionique et des propriétés mécaniques à l'électrode positive est constitué par un liant et par un sel de lithium. Le sel de lithium est choisi avantageusement parmi LiClO₄, LiPF₆, LiAsF₆, LiBF₄, LiR_{F}SO₃, LiCH₃SO₃, les bisperfluoroalkyl sulfonimidures de lithium, les bis- ou les trisperfluoroalkylsulfonylméthides de lithium, parmi lesquels le bistrifluorométhylsulfonimide de lithium est particulièrement préféré. Le liant est un liant organique électrochimiquement stable jusqu'à un potentiel de 4 V vs Li. Le liant peut être constitué par un polymère non solvatant et au moins un composé polaire aprotique. Le polymère non solvatant peut être choisi parmi les homopolymères et les copolymères de fluorure de vinylidène, les copolymères d'éthylène, de propylène et d'un diène, les homopolymères et les copolymères de tétrafluoroéthylène, les homopolymères et les copolymères de N-vinylpyrrolidone, les homopolymères et les copolymères d'acrylonitrile et les homopolymères et les copolymères de méthacrylonitrile. Le poly(fluorure de vinylidène) est particulièrement préféré. Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles. Le polymère non solvatant peut porter des fonctions ioniques. A titre d'exemple d'un tel polymère, on peut citer les sels de polyperfluoroéther sulfonate, dont certains sont commercialisés sous la dénomination Nafion^{®}, et les sels de polystyrène sulfonate. Le liant du matériau composite conférant des propriétés de conduction ionique et des propriétés mécaniques à l'électrode positive peut en outre être un polymère solvatant, c'est-à-dire un polymère qui comporte des unités solvatantes contenant au moins un hétéroatome choisi parmi le soufre, l'oxygène, l'azote et le fluor. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazênes ; les réseaux réticulés à base de polyéthylène glycol réticulé par des isocyanates ; les copolymères d'oxyéthylène et d'épichlorhydrine tels que décrits dans FR-9712952 ; et les réseaux obtenus par polycondensation et portant des groupements qui permettent l'incorporation de groupements réticulables. Les copolymères d'oxy-éthylène et d'épichlorhydrine sont particulièrement préférés comme liant du matériau composite de l'électrode positive conférant la conduction ionique et les propriétés mécaniques.

Le composé conférant des propriétés de conduction électronique est de préférence un noir de carbone qui ne catalyse pas l'oxydation de l'électrolyte à potentiel élevé. De nombreux noirs de carbone du commerce répondent à cette condition. On peut citer en particulier le composé Ensagri Super S^{®} commercialisé par la société Chemetals.

Dans un mode de réalisation particulièrement préféré, une électrode selon l'invention est constituée par un oxyde de lithium et de vanadium selon l'invention, par du noir de carbone, et par un matériau composite constitué par un poly(oxyde d'éthylène) ou un copolymère d'oxyde d'éthylène et d'épichlorhydrine et par du bistrifluorométhane sulfonimide de lithium, la proportion de matériau composite étant entre 5 et 40 en masse, de préférence entre 25 et 35% en masse.

Une électrode positive composite selon l'invention peut être élaborée en mélangeant la matière active et le noir de carbone dans une solution du liant dans un solvant approprié, en épandant le mélange obtenu sur un disque métallique servant de collecteur (par exemple un disque d'aluminium), puis en évaporant le solvant à chaud sous atmosphère d'azote. Le solvant est choisi en fonction du liant utilisé. A titre d'exemple, la cyclopentanone et la N-méthylpyrrolidone sont des solvants appropriés pour le liant poly fluorure de vinylidène.

Une électrode ainsi constituée peut être utilisée dans une batterie rechargeable au lithium comprenant une électrode positive et une électrode négative séparée par un électrolyte comprenant un sel de lithium en solution dans un solvant, dont le fonctionnement est assuré par la circulation réversible d'ions lithium dans un électrolyte contenant un sel de lithium entre les électrodes. L'un des objets de la présente invention est une telle batterie, caractérisée en ce qu'elle comprend une électrode positive telle que décrite ci-dessus. Parmi les batteries rechargeables au lithium, on distingue les batteries dont l'anode est constituée par du lithium métallique ou un alliage de lithium, désignées ci-après par "batteries au lithium métallique", et les batteries dites "rocking chair" dont l'anode comprend un liant et un matériau capable d'insérer de manière réversible des ions lithium à bas potentiel rédox, désignées ci-après par "batteries aux ions lithium".

Lors de l'assemblage d'une batterie selon la présente invention, on utilise pour constituer l'électrode positive, un oxyde Li₁₊ₓV₃O₈ (0,1 ≤ x ≤ 0,25), la batterie ainsi constituée se trouvant à l'état chargé.

Dans une batterie selon la présente invention, l'électrolyte comprend au moins un sel facilement dissociable en solution dans un solvant. Parmi les sels utilisés habituellement dans les batteries au lithium métallique ou les batteries aux ions lithium, on peut citer les sels de lithium, par exemple LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor. Le bistrifluorométhanesulfonimide de lithium est particulièrement préféré.

Le solvant de l'électrolyte peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de diéthyle et le carbonate de méthyle et d'éthyle.

Dans un autre mode de réalisation, l'électrolyte comprend un polymère solvatant et un sel de lithium tel que défini ci-dessus. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-9712952 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox. Bien entendu, la liste ci-dessus n'est pas limitative, et tous les polymères présentant des propriétés solvatantes peuvent être utilisés. L'électrolyte peut en outre contenir un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut également contenir un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion^{®} précité par exemple) ou un sel de polystyrène sulfonate. Lorsque l'électrolyte contient un polymère non solvatant, il est nécessaire qu'il contienne en outre au moins un composé polaire aprotique tel que défini précédemment ou au moins un polymère solvatant tel que défini précédemment. La présence d'un sel facilement dissociable est nécessaire lorsque le polymère présent dans l'électrolyte ne comporte pas de substituants ioniques.

Dans un autre mode de réalisation, l'électrolyte de la batterie de la présente invention peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON.

Bien entendu, l'électrolyte d'une batterie de la présente invention peut contenir en outre les additifs utilisés de manière classique dans ce type de matériau, et notamment un plastifiant, une charge, d'autres sels, etc.

Dans un mode de réalisation particulièrement préféré, l'électrolyte est constitué par une solution solide de bistri-fluorométhane sulfonimide de lithium (LiTFSI) dans le polyoxyéthylène ou dans un copolymère d'oxyéthylène et d'épichloridrine, contenant éventuellement une charge inorganique telle que par exemple la magnésie (MgO). La proportion massique de polymère est comprise entre 70 et 90% (de préférence entre 80 et 85%). La proportion massique de LiTFSI est comprise entre 10 et 30% (de préférence entre 15 et 20%) et la proportion massique en charge inorganique est inférieure à 30% (de préférence inférieure à 15%).

L'électrode négative d'une batterie selon l'invention est constituée par du lithium métallique ou un alliage de lithium qui peut être choisi parmi les alliages βi-LiAl, γ-LiAl, Li-Pb (par exemple Li₇Pb₂), Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn. L'électrode négative peut en outre être une électrode composite du type Li/Li₃N ou LiₓPb-polyparaphénylène.

Lorsque la batterie selon l'invention est une batterie aux ions lithium, elle comprend une électrode composite négative constituée par un liant et un matériau capable d'insérer de manière réversible des ions lithium à bas potentiel rédox, ledit matériau composite étant lithié au cours d'une étape préliminaire. Un tel matériau peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau capable d'insérer de manière réversible des ions lithium à bas potentiel rédox peut en outre être choisi parmi les oxydes tels que par exemple LiₓMoO₂, LiₓWO₂, LiₓFe₂O₃, Li₄Ti₅O₁₂, LiₓTiO₂ ou parmi les sulfures tels que par exemple LigMo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄) les nitrures (par exemple Li_{2,6-x}CO_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O). Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de vinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant à chaud sous atmosphère d'azote.

Une batterie selon l'invention comprenant un électrolyte solide peut se présenter sous la forme d'une succession de couches constituées respectivement par le matériau de l'électrode positive selon l'invention et son collecteur de courant, l'électrolyte solide, et l'électrode négative et éventuellement son collecteur de courant.

Une batterie selon l'invention comprenant un électrolyte liquide peut également se présenter sous forme d'une succession de couches constituées respectivement par le matériau de l'électrode positive selon l'invention et son collecteur de courant, un séparateur imbibé par l'électrolyte liquide, et le matériau constituant l'électrode négative et éventuellement son collecteur de courant.

L'utilisation comme matière active d'un oxyde de vanadium et de lithium selon l'invention améliore de manière considérable la capacité et la tenue en cyclage de la batterie, par rapport aux oxydes de lithium et de vanadium de l'art antérieur.

La présente invention est illustrée plus en détail par les exemples donnés ci-après auxquels elle n'est cependant pas limitée.

### Exemple 1

### Préparation d'un composé Li_{1,1}V₃O₈ selon l'invention

On a introduit dans une Pulvérisette 472 mg de poudre de V₂O₅-α et 70 mg de poudre de Li₂CO₃ et on a mélangé pendant 5 min à une vitesse de 200 tr/min. On a ensuite introduit les poudres mélangées dans un réacteur et on a chauffé à 580°C pendant 10 h. Le produit résultant a été introduit dans la Pulvérisette et soumis à un mélangeage à 200 tr/min pendant 5 min en vue de décompacter les particules de poudres.

Un deuxième échantillon d'oxyde été préparé dans les mêmes conditions, mais en chauffant le mélange de poudre à 570°C au lieu de 580°C.

### Préparation de composés Li_{1,1}V₃O₈ à titre comparatif

A titre comparatif, on a préparé des composés Li₁,₁V₃O₈ dans les conditions indiquées ci-dessus, successivement aux températures suivantes : 500°C, 520°C, 560°C, 590°C et 600°C.

### Analyse des produits obtenus

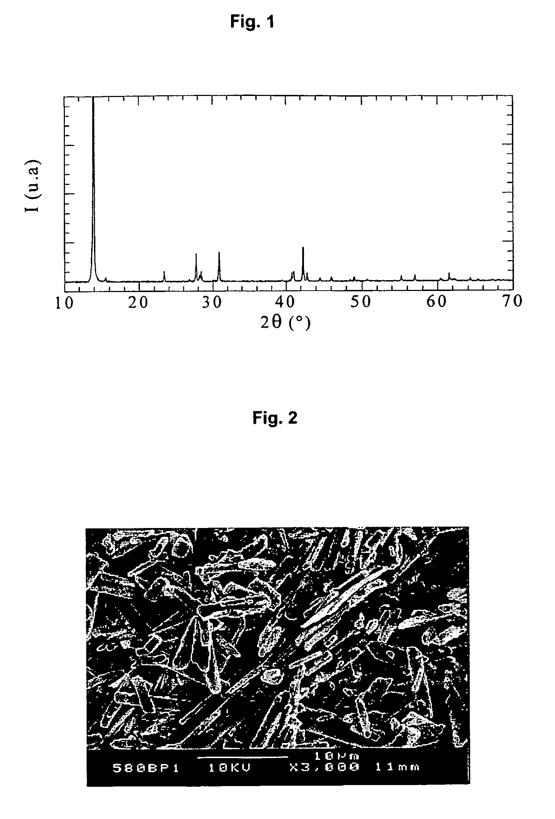

La composition du produit obtenu dans chaque cas a été déterminée par diffraction des rayons X. Les diagrammes sont en accord avec la fiche PDF n° 80-0071 correspondant à Li_{1,1}V₃O₈ et aucune impureté n'est détectée. Le diagramme de diffraction des rayons X (radiation CuKα : λ=1,5418 Å) du produit selon l'invention est représenté sur la figure 1.

La morphologie du composé selon l'invention et des composés préparés à titre comparatif a été observée avec un microscope électronique à balayage de type JEOL JSM 6400F. La microphotographie obtenue pour le composé préparé à 580°C au grossissement 3000 est représentée sur la figure 2. Elle montre la morphologie en bâtonnets monocristallins ayant une longueur L comprise entre 5 et 30 µm, une largeur ℓ comprise entre 0,5 et 2 µm, et une épaisseur e comprise entre 0,5 et 2 µm. Une analyse réalisée par granulométrie Laser sur l'appareil LS130 de la société Coultronics indique une distribution de la taille moyenne des particules entre 1 et 10 µm avec une valeur moyenne de l'ordre de 3,5 µm. Des résultats identiques sont observés pour le composé selon l'invention préparé à 570°C.

La morphologie des oxydes préparés à titre comparatif est la suivante :
- Oxyde préparé à 500°C: grains inhomogènes en forme et en taille, constitués de petits bâtonnets polycristallins de taille de l'ordre du micron pour leur plus grande longueur.
- Oxyde préparé à 520°C: grains inhomogènes en forme et en taille, constitués de petits bâtonnets polycristallins de l'ordre du micron pour leur plus grande longueur.
- Oxyde préparé à 560°C : grains inhomogènes en forme et en taille, constitués de bâtonnets polycristallins entre 1 et 5 µm de longueur
- Oxyde préparé à 590°C : très proche de celle de l'oxyde préparé à 560°C mais avec un frittage de la poudre.
- Oxyde préparé à 600°C (point de fusion de l'oxyde) : obtention d'un bloc fondu constitué de cristaux entremêlés de longueur supérieure ou égale à 20 µm.

### Exemple 2

### Préparation d' un composé Li_{1,1}V₃O₈ selon l'invention

On a introduit dans un mélangeur VMI/RAYNERI de type R51 4,72 kg de poudre de V₂O₅-α et 0,70 kg de poudre de Li₂CO₃ et on a mélangé pendant 15 min à une vitesse de 80 tr/min. On a ensuite introduit les poudres mélangées dans un réacteur et on a chauffé à 580°C pendant 10 h. Le produit résultant a été introduit dans le mélangeur et soumis à un mélangeage à 80 tr/min pendant 15 min en vue de décompacter les particules de poudres.

### Analyse du produit obtenu

Le diagramme de diffraction des rayons X du produit obtenu est en accord avec la fiche PDF n°80-0071 correspondant à Li₁,₁V₃O₈ et aucune impureté n'est détectée.

La morphologie du composé préparé a été observée avec un microscope électronique à balayage de type JEOL JSM 6400F. L'oxyde obtenu présente une morphologie en bâtonnets monocristallins ayant une longueur L comprise entre 5 et 30 µm, une largeur ℓ comprise entre 0,5 et 2 µm, et une épaisseur e comprise entre 0,5 et 2 µm.

Une analyse a été réalisée par granulométrie Laser sur l'appareil LS130 de Coultronics. Elle indique une distribution de la taille moyenne des particules entre 1 et 10 µm avec un maximum de l'ordre de 3,5 µm.

### Exemple 3

### Utilisation du composé Li_{1,1}V₃O₈ dans une batterie à électrolyte liquide

Les composés Li_{1,1}V₃O₈ obtenus respectivement à 580°C et à 571°C selon le procédé décrit dans l'exemple 1 ont été utilisés comme matière active de cathode dans une batterie à vis de laboratoire fonctionnant à température ambiante et ayant la structure suivante :

Li / (EC+DMC+LiPF₆) / Li₁,₁V₃O₈ + carbone + liant

L'anode est une plaque de lithium. Le solvant de l'électrolyte est constitué par un mélange de carbonate d'éthylène et de carbonate de diméthyle dans les proportions 2/1.

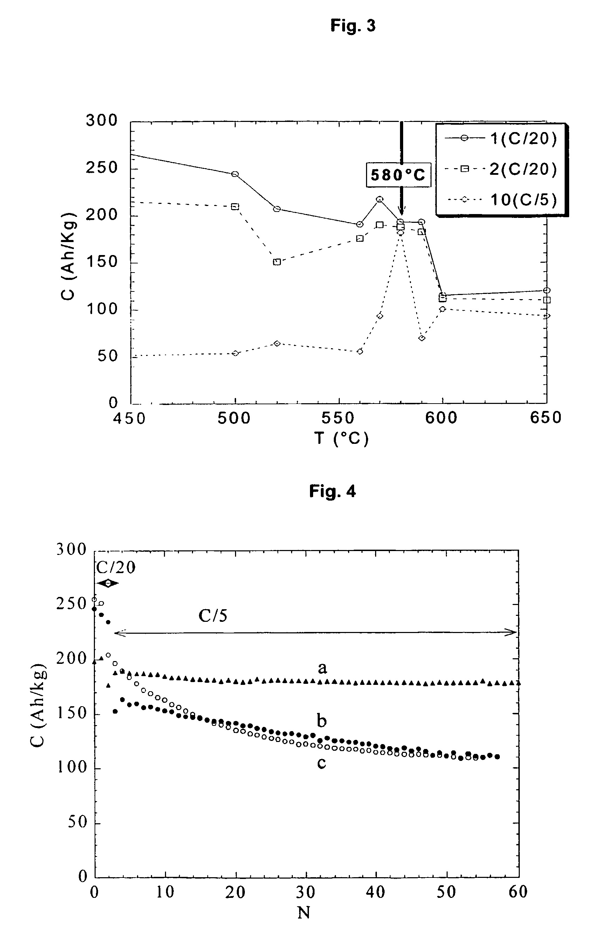

Dans une première série d'essais, on a mesuré la capacité à trois régimes de décharge pour deux batteries contenant le composé Li_{1,1}V₃O₈ de l'invention préparé selon l'exemple 1 par chauffage respectivement à 580°C et à 570°C, et pour des batteries contenant les composés préparés à titre comparatif tel que décrit dans l'exemple 1. Pour chacun des oxydes, on a monté une batterie comprenant comme matière active de cathode ledit oxyde. La capacité C (exprimée en Ah/kg) a été déterminé à différents régimes de cyclage, pour chacune des batteries. Les résultats sont représentés sur la figure 3. Les points représentés par ○ correspondent à la 1^{ère} décharge à un régime de décharge de C/20, les points représentés par □ correspondent à la 2^{ème} décharge à un régime de décharge de C/20, les points représentés par ◇ correspondent à la 10^{ème} décharge à un régime de C/5. Il apparaît clairement que la capacité diminue fortement dès que la température de préparation de l'oxyde de lithium et de vanadium s'écarte de l'intervalle de température requis pour le procédé de la présente invention.

Dans une deuxième série d'essais comparatifs, on a monté deux batteries similaires à celle de l'invention, en utilisant comme matière active de la cathode, pour l'une un oxyde de lithium et de vanadium obtenu par chauffage d'un mélange de V₂O₅-α et de Li₂CO₃ à 580°C suivi d'un broyage, et pour l'autre un oxyde de lithium et de vanadium obtenu par broyage et compactage des réactifs, chauffage à 580°C, puis rebroyage. La variation de la capacité C (en Ah/kg) en fonction du nombre de cycle N est représentée sur la figure 4. Sur cette figure, la courbe (a) correspond à une batterie selon l'invention, la courbe (b) correspond à la batterie comprenant l'oxyde soumis à un broyage, la courbe (c) correspond à la batterie comprenant l'oxyde obtenu par broyage des réactifs, compactage, chauffage et rebroyage. Les trois premiers cycles ont été effectués à un régime de décharge de C/20, les cycles suivants à un régime de C/5. Il apparaît clairement que l'absence de broyage et de compactage avant le chauffage et l'absence de broyage après le chauffage sont indispensables pour conserver une capacité plus élevée en cyclage.

### Exemple 4

### Utilisation du composé Li_{1,1}V₃O₈ dans une batterie à électrolyte polymère

On a réalisé une pile rechargeable au lithium à électrolyte polymère.

L'électrolyte est un film ayant une épaisseur de 30 µm, constitué par le LiTFSI (20% en masse) en solution dans un polymère d'oxyde d'éthylène (70% en masse), et un oxyde de magnésium (10% en masse). Le film d'électrolyte est obtenu par extrusion. L'anode est une feuille de lithium ayant une épaisseur de 50 µm. La cathode est une cathode composite de sous forme d'un film ayant une épaisseur de 30 µm et obtenu par extrusion, et elle comprend environ 54% d'oxyde de vanadium Li_{1,1}V₃O₈ obtenu à 580°C selon le procédé de l'exemple 1, environ 14% de noir d'acétylène, environ 24% d'un polymère d'oxyde d'éthylène et environ 8% de LiTFSI, les proportions étant exprimées en masse. La cathode, qui a une surface voisine de 4500 cm², a été laminée sur un collecteur à base d'aluminium de 15 µm. La batterie a été assemblée par enroulement et pressage des différents films à chaud à 60°C.

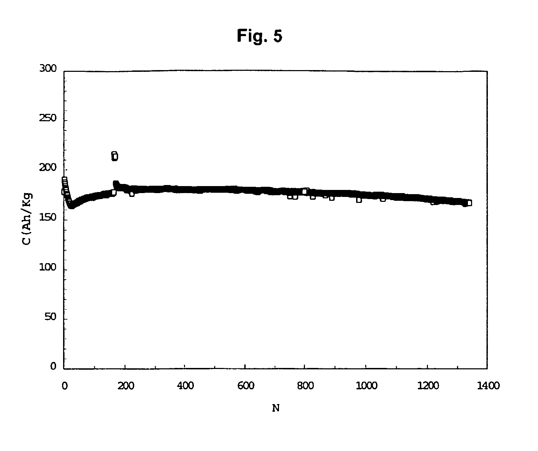

La batterie ainsi formée est cyclée sous une température de 90°C. Le courant de charge est de C/4 et le courant de décharge est de C/1,5. L'évolution de la capacité C (en Ah/kg) en fonction du nombre de cycles N est représentée sur la figure 5. Il apparaît que l'oxyde de vanadium Li₁₊ₓV₃O₈ fournit, pour 100 % de profondeur de décharge, une capacité constante de 180 Ah.kg⁻¹ de matière active, soit une énergie de 450 Wh/kg de Li₁₊ₓV₃O₈ (potentiel moyen ~ 2,5 V). On obtient une projection de fin de vie (définie comme le nombre de cycles après lequel une décharge ponctuelle complète ne permet de récupérer que 80% de la capacité initiale) supérieure à 1350 cycles.

## Revendications

1. Oxyde de lithium et de vanadium qui répond à la formule Li₁₊ₓV₃O₈ dans laquelle 0, 1 ≤ x ≤ 0,25, qui a une structure cristalline monoclinique, et qui est **caractérisé en ce qu'**il est constitué de grains non agglomérés en forme de bâtonnets monocristallins :
- qui ont une longueur L comprise entre 1 et 100 µm, une largeur ℓ telle que 4 < L/ℓ < 100, et une épaisseur e telle que 4 < L/e < 100, avec e < ℓ ;
- dont l'axe d'allongement est l'axe b de la maille monoclinique.

2. Oxyde selon la revendication 1, **caractérisé en ce que** les dimensions respectives des grains sont telles que 10 < L/ℓ < 50, et 10 < L/e < 50.

3. Procédé pour la préparation d'un oxyde de lithium et de vanadium selon la revendication 1, consistant à faire réagir au moins un précurseur de Li avec au moins un précurseur de vanadium, **caractérisé en ce que** :
- on introduit dans un mélangeur le(s) précurseur(s) de Li et le(s) précurseur(s) de V en poudre dans les proportions stoechiométriques Li/V = (1+x)/3 ;
- on effectue le mélangeage dans des conditions telles que, après le mélangeage, la densité du mélange obtenu est inférieure à 1,5 et les dimensions des grains de poudre sont telles que leur longueur soit supérieure à 1 µm, leur largeur soit supérieure à 0,1 µm et leur épaisseur soit supérieure à 0,1 µm ;
- on porte le mélange obtenu à une température comprise entre 565°C et 585°C et l'on maintient cette température pendant une durée comprise entre 30 min et 10 h ;
- on effectue une désagglomération du produit obtenu pour séparer les grains de poudre sans les broyer.

4. Procédé selon la revendication 3, **caractérisé en ce que** le précurseur de lithium est un sel de lithium ou un oxyde de lithium.

5. Procédé selon la revendication 3, **caractérisé en ce que** le précurseur de lithium est choisi parmi Li₂CO₃, LiNO₃, LiOH, LiOH.H₂O et Li₂O, ou parmi l'acétate de lithium, l'acétylacétonate de lithium, le stéarate de lithium, le formiate de lithium, l'oxalate de lithium, le citrate de lithium, le lactate de lithium, le tartrate de lithium, le pyruvate de lithium.

6. Procédé selon la revendication 3, **caractérisé en ce que** le précurseur de vanadium est un sel de vanadium ou un oxyde de vanadium.

7. Procédé selon la revendication 3, **caractérisé en ce que** le précurseur de vanadium est choisi parmi V₂O₅-α, NH₄VO₃, V₂O₄ et V₂O₃.

8. Procédé selon la revendication 3, **caractérisé en ce que** le précurseur de lithium est un composé mixte de Li et de V.

9. Procédé selon la revendication 3, **caractérisé en ce que** le chauffage est effectué à une température entre 575°C et 585°C.

10. Electrode positive pour batterie au lithium, **caractérisée en ce qu'**elle contient comme matière active un oxyde de lithium et de vanadium selon l'une des revendications 1 ou 2.

11. Electrode selon la revendication 10, **caractérisée en ce qu'**elle contient en outre un matériau conférant des propriétés de conduction électronique et un matériau composite conférant des propriétés de conduction ionique et des propriétés mécaniques.

12. Electrode selon la revendication 10, **caractérisée en ce que** la teneur en matière active est de 40 à 90% en masse.

13. Electrode selon la revendication 11, **caractérisée en ce que** la teneur en matériau conférant des propriétés de conduction électronique est de 5% et 20% en masse.

14. Electrode selon la revendication 11, **caractérisée en ce que** la teneur en matériau composite conférant la conduction ionique et les propriétés mécaniques est entre 5% et 40 % en masse.

15. Electrode selon la revendication 11, **caractérisée en ce que** le matériau composite conférant la conduction ionique et les propriétés mécaniques est constitué d'une part par un sel de lithium et d'autre part par un liant constitué par un polymère non solvatant et au moins un composé polaire aprotique.

16. Electrode selon la revendication 11, **caractérisée en ce que** le matériau composite conférant la conduction ionique et les propriétés mécaniques est constitué d'une part par un sel de lithium et d'autre part par un liant constitué par un polymère solvatant.

17. Electrode selon la revendication 16, **caractérisée en ce que** le polymère solvatant est un copolymère d'oxyéthylène et d'épichlorhydrine.

18. Electrode selon la revendication 11, **caractérisée en ce que** le matériau conférant la conduction électronique est un noir de carbone.

19. Batterie rechargeable au lithium comprenant une électrode positive et une électrode négative séparée par un électrolyte comprenant un sel de lithium en solution dans un solvant, dont le fonctionnement est assuré par la circulation réversible d'ions lithium entre les électrodes, **caractérisée en ce que** l'électrode positive est une électrode selon l'une des revendications 10 à 18.

20. Batterie selon la revendication 19, **caractérisée en ce que** l'électrolyte contient un sel de lithium choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor.

21. Batterie selon la revendication 19, **caractérisée en ce que** le solvant de l'électrolyte est un composé polaire aprotique choisi parmi les carbonates linéaires ou cycliques, les éthers linéaires ou cycliques, les esters linéaires ou cycliques, les sulfones linéaires ou cycliques, les sulfamides et les nitriles.

22. Batterie selon la revendication 19, **caractérisé en ce que** le solvant de l'électrolyte est un polymère solvatant.

23. Batterie selon la revendication 19, **caractérisée en ce que** l'électrolyte est constitué par une solution solide de bistrifluorométhane sulfonimide de lithium (LiTFSI) dans un polyoxyéthylène ou dans un copolymère d'oxyéthylène et d'épichloridrine, contenant éventuellement une charge inorganique.

24. Batterie selon la revendication 19, **caractérisée en ce que** l'électrode négative est constituée par du lithium métallique, ou par un alliage de lithium qui peut être choisi parmi les alliages β-LiAl, γ-LiAl, Li-Pb, Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn ou l'électrode négative est .̅ une électrode composite du type Li/Li₃N ou LiₓPb-polyparaphénylène.

25. Batterie selon la revendication 19, **caractérisée en ce que** l'électrode négative est une électrode composite constituée par un liant et un matériau capable d'insérer de manière réversible des ions lithium à bas potentiel rédox, ledit matériau composite étant lithié au cours d'une étape préliminaire.

26. Batterie selon la revendication 22, **caractérisée en ce qu'**elle est formée par une succession de couches constituées respectivement par le matériau de l'électrode positive et son collecteur de courant, l'électrolyte constitué par un sel de lithium en solution dans un polymère solvatant, et l'électrode négative et éventuellement son collecteur de courant.

27. Batterie selon la revendication 21, **caractérisée en ce qu'**elle est formée par une succession de couches constituées respectivement par le matériau de l'électrode positive et son collecteur de courant, un séparateur imbibé par l'électrolyte liquide, et le matériau constituant l'électrode négative et éventuellement son collecteur de courant.

## Claims

1. Lithium vanadium oxide which corresponds to the formula Li₁₊ₓV₃O₅ wherein 0.1 ≤ x ≤ 0.25, which has a monoclinic crystallize structure and which is **characterised in that** it is composed of non-agglomerated grains in the form of monocrystalline rodlets:
- which have a length L of between 1 and 100 µm inclusive, a widths ℓ such that 4 < L/ℓ< 100, and a thickness e such that 4 < L/ℓ < 100, with e < ℓ ;
- the axis of elongation of which is the axis b of the monoclinic unit cell.

2. Oxide according to claim 1, **characterised in that** the respective dimensions of the grains are such that 10 < L/ℓ < 50 and 10 < L/ℓ < 50.

3. Process for the preparation of a lithium vanadium oxide according to claim 1. consisting ot causing at least one precursor of Li to react with at least one precursor of vanadium, **characterised in that**:
- the precursor(s) of Li and the precursor(s) of V are introduced in powder form into a mixer in the stoichiometric proportions Li/V = (1+x)/3;
- mixing is carried out under conditions such that, after mixing, the density of the mixture obtained is less than 1.5 and the dimensions of the grains of powder are such that their length is greater than 1 µm, their width a greater than 0.1 µm and their thickness is greater than 0.1 µm;
- the mixture obtained is brought to a temperature between 565°C and 585°C inclusive and that temperature is maintained for a period between 30 minutes and 10 hours inclusive;
- deagglomeration of the product obtained as carried out to separate the grains of powder without grinding them.

4. Process according to claim 3, **characterised in that** the precursor of lithium is a lithium salt or a lithium oxide.

5. Process according to claim 3, **characterised in that** the precursor of lithium is selected from Li₂CO₃, LiNO₃, LiOH, LiOH.H₂O and Li₂O or from lithium acetate, lithium acetylacetonate, lithium stearate, lithium formate, lithium oxalate, lithium citrate, lithium lactate, lithium tartrate and lithium pyruvate.

6. Process according to claim 3, **characterised in that** the precursor of vanadium is a vanadium salt or a vanadium oxide.

7. Process according to claim 3, **characterised in that** the precursor of vanadium is selected from α-V₂O₅, NH₄VO₃, V₂O₄ and V₂O₃.

8. Process according to claim 3, **characterised in that** the precursor of lithium is a mixed Li and V compound.

9. Process according to claim 3, **characterised in that** the heating is carried out at a temperature between 575°C and 585°C.

10. Positive electrode for a lithium battery, **characterised in that** it comprises as active material a lithium vanadium oxide according to one of claims 1 or 2.

11. Electrode according to claim 10, **characterised in that** it additionally comprises a material conferring electronic conduction properties and a composite material conferring ionic conduction properties and mechanical properties.

12. Electrode according to claim 10, **characterised in that** the content of active material is from 40 to 90 % by weight.

13. Electrode according to claim 11, **characterised in that** the content of material conferring electronic conduction properties is from 5 % to 20 % by weight.

14. Electrode according to claim 11, **characterised in that** the content of composite material conferring ionic conduction and mechanical properties is between 5 % and 40 % by weight.

15. Electrode according to claim 11, **characterised in that** the composite material conferring ionic conduction and mechanical properties is composed of, on the one hand, a lithium salt and, on the other hand, a binder composed of a non-solvating polymer and at least one aprotic polar compound.

16. Electrode according to claim 11, **characterised in that** the composite material conferring ionic conduction and mechanical properties is composed of, on the one hand, a lithium salt and, on the other hand, a binder composed of a solvating polymer.

17. Electrode according to claim 16, **characterised in that** the solvating polymer is an ethylene oxide and epichlorohydrin copolymer.

18. Electrode according to claim 11, **characterised in that** the material conferring electronic conduction is a carbon black.

19. Rechargeable lithium battery comprising a positive electrode and a negative electrode separated by an electrolyte comprising a lithium salt in solution in a solvent, which functions by way of the reversible circulation of lithium ions between the electrodes, **characterised in that** the positive electrode is an electrode according to one of claims 1 to 18.

20. Battery according to claim 19. **characterised in that** the electrolyte contains a lithium salt selected from LiClO₄, LiAsF₆, LiPF₆, LiBF₄, LiR_{F}SO₃, LiCH₃SO₃, LiN(R_{F}SO₂)₂, LiC(R_{F}SO₂)₃ and LiCF(R_{F}SO₂)₂, R_{F} representing a perfluoroalkyl group having from 1 to 8 carbon atoms or a fluorine atom.

21. Battery according to claim 19, **characterised in that** the solvent of the electrolyte is an aprotic polar compound selected from linear or cyclic carbonates, linear or cyclic ethers, linear or cyclic ester linear or cyclic sulfones, sulfamides and nitriles.

22. Battery according to claim 19, **characterised in that** the solvent of the electrolyte is a solvating polymer.

23. Battery according to claims 19, **characterised in that** the electrolyte is composed of a solid solution of lithium bistrifluoromethane sulfonimide (LiTFSI) in a polyoxyethylene or in an ethylene oxide and epichlorohydrin copolymer, optionally containing an inorganic filler.

24. Battery according to claim 19, **characterised in that** the negative electrode is composed of lithium metal or a lithium alloy which may be selected from the alloys β-LiAl, γ-LiAll, Li-Pb, Li-Cd-Pb, Li-Sn, Li-Sn-Cd, Li-Sn in various matrices, especially oxygen-containing matrices or metal matrices (for example Cu, Ni, Fe, Fe-C), and Li-Al-Mn, or the negative electrode is a composite electrode of the Li/Li₃N or LiₓPb-polyparaphenylene type.

25. Battery according to claim 19, **characterised in that** the negative electrode is a composite electrode composed of a binder and a material capable of reversibly inserting lithium ions at low redox potential, said composite material being lithiated in the course of a preliminary step.

26. Battery according to claim 22, **characterised in that** it is formed by a succession of layers composed respectively of the material of the positive electrode and its current collector, the electrolyte composed of a lithium salt in solution in a solvating polymer, and the negative electrode and, optionally, its current collector.

27. Battery according to claim 21, **characterised in that** it is formed by a succession of layers composed respectively of the material of the positive electrode and its current collector, a separator soaked in the liquid electrolyte and the material forming the negative electrode and, optionally, its current collector.

## Patentansprüche

1. Lithium-Vanadium-Oxid, das der Formel Li_{1+X}V₃O₈ mit 0,1 ≤ x ≤ 0,25 entspricht, welches eine monokline Kristallstruktur besitzt und **dadurch gekennzeichnet ist, dass** es aus nicht agglomerierten Körnern in Form von monokristallinen Stäbchen aufgebaut ist:
- die eine Länge L zwischen 1 und 100 µm, eine Breite ℓ, so dass 4 < L/ℓ < 100 ist, und eine Höhe e, so dass 4 < L/e < 100 ist, mit e < ℓ aufweisen,
- deren Ausdehnungsachse die Achse b der monoklinen Flementarzelie ist.

2. Oxid gemäß Anspruch 1, **dadurch gekennzeichnet, dass** die entsprechenden Ausmaße der Körner so beschaffen sind, dass 10 < L/ℓ < 50 und 10 < L/e < 50 ist.

3. Verfahren zur Herstellung eines lithium-Vanadium-Oxids gemäß Anspruch 1, darin bestehend, dass mindestens eine Li-Vorstufe mit mindestens einer Vanadium-Vorstufe zur Reaktion gebracht wird, **dadurch gekennzeichnet, dass**:
- die Li-Vorstufe(n) und die V-Vorstufe(n) in Pulverform in den stöchiometrischen Verhöltnissen Li/V = (1+x)/3 in einen Mischapparat eingeführt werden;
- das Mischen so ausgeführt wird, dass nach dem Mischen die Dichte der erhaltenen Mischung unterhalb von 1,5 ist und die Ausmaße der pulverförmigen Körner so sein sollen, dass ihre Länge oberhalb von 1 µm, ihre Breite oberhalb von 0,1 µm und ihre Höhe oberhalb von 0,1 µm ist;
- die erhaltene Mischung auf eine Temperatur zwischen 565°C und 585 °C gebracht wird und diese Temperatur für eine Dauer zwischen 30 min und 10 h gehalten wird;
- eine Desagglomeration des erhaltenen Produktes durchgeführt wird, um die pulverförmigen Körner zu trennen, ohne sie zu zerkleinern.

4. Verfahren gemäß Anspruch 3, **dadurch gekennzeichnet, dass** die Lithium-Vorstufe ein Lithiumsalz oder ein Lithiumoxid ist.

5. Verfahren gemäß Anspruch 3, **dadurch gekennzeichnet, dass** die Lithium Vorstufe ausgesucht wird aus Li₂CO₃, LiNO₃, LiOH, LiOH.H₂O und Li₂O oder aus Lithiumacetat, Lithiumacetylacetonat, Lithiumstearat, Lithiumformiat, Lithiumoxolat, Lithiumcitrat, Lithiumlactat, Lithiumtartrate, Lithiumpyruvat.

6. Verfahren gemäß Anspruch 3, **dadurch gekennzeichnet, dass** die Vanadium Vorstufe ein Vanodiumsalz oder ein Vanadiumoxid ist.

7. Verfahren gemäß nach Anspruch 3, **dadurch gekennzeichnet, dass** die Vanadium-Vorstufe ausgewählt wird aus V₂O₅-α, NH₄VO₃, V₂O₄ und V₂O₃.

8. Verfahren gemäß Anspruch 3, **dadurch gekennzeichnet, dass** die Lithium-Vorstufe eine gemischte Verbindung aus Li und V ist.

9. Verfahren gemäß Anspruch 3, **dadurch gekennzeichnet, dass** das Aufheizen bis zu einer Temperatur zwischen 575 °C und 585 °C ausgeführt wird.

10. Positive Elektrode für eine Lithiumbatterie, **dadurch gekennzeichnet, dass** sie als aktiven Stoff ein Lithium-Vanadium-Oxid gemäß einem der Ansprüche 1 oder 2 enthält.

11. Elektrode gemäß Anspruch 70, **dadurch gekennzeichnet, dass** sie zusätzlich ein Material enthäit, weiches elektrische Leilfähigkeibeigenschaften verleiht, und ein Kompositmaterial, welches ionische Leitfählgkeitseigenschaften und mechanische Eigenschaften verleiht.

12. Eleklrode gemäß Anspruch 10, **dadurch gekennzeichnet, dass** der Gehalt an aktivem Stoff zwischen 40 und 90 Gewichts-% liegt.

13. Elektrode gemäß Anspruch 11; **dadurch gekennzeichnet, dass** der Gehalt des Materials, welches elektrische Leitfahigkeitseigenschoften verleiht, zwischen 5 und 20 Gewichts-% liegt.

14. Elektrode gemäß Anspruch 11, **dadurch gekennzeichnet, dass** der Gehalt des Kompositmaterials, welches ionische Leitföhlgkeit und mechanische Eigenschaften verleiht, zwischen 5 und 40 Gewichts-% liegt.

15. Elektrode gemäß Anspruch 11, **dadurch** gekenntzeichnet, dass das Kompositmoterial, welches ionisch Leitfähigkeit und mechanisch Eigenschaften verleiht, zum einen aus einem Lithiumsalz und zum anderen aus einem Bindemittei, weiches aus einem nichtsolvatisierender polymer und mindestens einer polaren aprotischen Verbindung aufgebaut ist, aufgebaut ist.

16. Elektrode gemäß Anspruch 11, **dadurch gekennzeichnet, dass** das Kompositmaterial, welches die ionische Leitfähigkeit und die mechanischer Eigenschaften verleiht, zum einen aus einem Lithiumsalz und zum anderen aus einem Bindemittel, weiches aus einem solvatisierenden Polymer aufgebaut ist, aufgebaut ist.

17. Elektrode gemäß Anspruch 16, **dadurch gekennzeichnet, dass** das solvatisierende Polymer ein Copolymer aus Oxyethylen und Epichlorhydrin ist.

18. Elektrode gemäß Anspruch 11, **dadurch gekennzeichnet, dass** das Material, welches die elektrische LeitfähigKeit verleint, Ruß ist.

19. Aufladbare Lithium-Batterie, welche eine positive Elektrode und eine negative Elektrode umfasst, die durch einen Elektrolyten, umfassend ein in einem Lösungsmittel gelöstes Lithiumsalz, getrennt sind, deren Funktionsweise durch die reversible Wanderung der Lithiumionen zwischen den Elektroden sichergestellt ist, **dadurch gekennzeichnet, dass** die positive Elektrode eine Elektrode gemäß einem der Ansprüche 10 bis 18 ist.

20. Batterie gemäß Anspruch 19, **dadurch gekennzeichnet, dass** der Elektrolyt ein Lithiumsalz ausgewählt aus LiClO₄, LiAsF_{6,} LiPF₆, LiBF₄, LiRrSO₃, LiCH₃SO₃, LiN(R_{F}SO₂)₂, LiC(R_{F}SC₂)₃ und LiCF(R_{F}SO₂)₂ umfasst, wobei R_{F} einer Perfluoolkyl-Gruppe mit 1 bis 8 Kohlenstoffatomen oder einem Fluoratom entspricht.

21. Batterie gemäß Anspruch 19, **dadurch gekennzeichnet, dass** das Lösungsmittel des Elektrolyten eine polare aprotische Verbindung ausgewählt aus linearen oder zyklischen Garbonaten, linearen oder zyklischen Ethern, linearen oder zyklischen Estern, linearen oder zyklischen Sulfonen, Sulfonamiden oder Nitrilen ist,

22. Batterie gemäß Anspruch 19, **dadurch gekennzeichnet, dass** das Lösungsmittel des Elektrolyten ein solvatisierendes Polymer ist.

23. Batterie gemäß Anspruch 19, **dadurch gekennzeichnet, dass** der Elektrolyt aus einem Mischkristall aus Lithiumbis(trifluormethylsulfonyl)imid (LiTFSI) in einem Polyexyethylen oder einem Copolymer aus Oxyethylen und Epichlorhydrin aufgebaut ist und gegebenenfalls einen Füllstoff enthält.

24. Batterie gemäß Anspruch 19, **dadurch gekennzeichnet, dass** die negative Elektrode aus metallischem Lithium oder einer Uthlumlegierung ausgewählt aus den Legierungen β-LiAI, γ-LiAl, Li-Pb, Li-Cd-Pb, Li-Sn. Li-Sn-Cd. Li-Sn in unterschiedlichen Matrices, insbesondere oxidierte Matrices oder metallische Matrices (beispielsweise Cu, Ni, Fe, Fe-C), Li-Al-Mn ist oder die negative Elektrode eine Kompositelektrode vom Typ Li/Li₃N oder LiₓPb-Polyporaphenylen ist.

25. Batterie gemäß Anspruch 19, **dadurch gekennzeichnet, dass** die negative Elektrode eine Kompositelektrode ist, die aus einem Bindemittel und einem Material, welches zum reversiblen Einfügen von Lithiumionen mit niedrigem Redoxpotential fähig ist, aufgebaut ist, wobei das Kompositmaterial im Zuge eines vorherigen Schrittes mit Lithium versehen wird.

26. Batterie gemäß Anspruch 22, **dadurch gekennzeichnet, dass** sie aus einer Abfolge von Schichten gebildet wird, weiche jeweils aus dem Material der positiven Elektrode und seinem Stromabnehmer, dem Elektrolyten, der aus einem in einem solvatisierenden Polymer gelösten Lithiumsalz aufgebaut ist, und der negativen Elektrode und gegebenenfalls seinem Stromabnehmer aufgebaut sind.

27. Batterie gemäß Anspruch 21, **dadurch gekennzeichnet, dass** sie aus einer Abfolge von Schichten gebildet wird, weiche jeweils aus dem Material der positiven Elektrode und seinem Stromabnehmer, einem mit dem flüssigen Elektrolyten durchtränkten Separator und dem Material, welches die negative Elektrode aufbaut, und gegebenenfalls seinen Stromabnehmer aufgebaut sind.
